# EUROPEAN PATENT SPECIFICATION

(11) **EP 4 454 862 B1**
(45) Date of publication and mention of the grant of the patent: **26.11.2025**
(21) Application number: 23461564.9
(22) Date of filing: 25.04.2023
(51) Int. Cl.: B29C 64/241, B29C 64/245, B22F 12/30, B22F 10/85, B22F 12/90

(54) **A SYSTEM FOR SELF-LEVELLING THE TABLE FOR 3D PRINTERS**
SYSTEM ZUR SELBSTNIVELLIERUNG DES TISCHES FÜR 3D-DRUCKER
SYSTÈME D'AUTO-NIVELAGE DE LA TABLE POUR IMPRIMANTES 3D

(43) Date of publication of application: 30.10.2024
(73) Proprietor: Uniwersytet Zielonogórski, 65-417 Zielona Góra (PL)
(72) Inventor: PACZKOWSKI, Jacek, 67-100 Nowa Sól (PL); OSTROWSKI, Kacper, 65-533 Zielona Góra (PL); KRAMEK, Krzysztof, 65-124 Zielona Góra (PL); MRUGALSKI, Marcin, 65-128 Zielona Góra (PL)
(74) Representative: JD&P Patent Attorneys Joanna Dargiewicz & Partners

(56) References cited:
- WO-A1-2021/025939
- CN-U- 207 172 752
- RAT RIG: "Rat Rig V-Core 3 - 3 Point Kinematic Bed", 23 December 2020 (2020-12-23), XP093081801, Retrieved from the Internet <URL:https://www.youtube.com/watch?v=bgkK7Fez8VU&t=3s> [retrieved on 20230913]
- ZENG LIANGHUA ET AL: "3D Printer Self-Adaptive Levelling Algorithm and Structure Design", 2019 4TH INTERNATIONAL CONFERENCE ON MECHANICAL, CONTROL AND COMPUTER ENGINEERING (ICMCCE), IEEE, 24 October 2019 (2019-10-24), pages 1054 - 10542, XP033696553, DOI: 10.1109/ICMCCE48743.2019.00235

## Description

The present invention relates to a system for self-levelling the table for 3D printers.

Two solutions for filament printers dominate the market: with a table that moves in the Y-axis and with a table that moves in the Z-axis. The problem with both types of printers is that the table is set roughly ('by eye') by hand. As a result, printouts are quite often unsuccessful. For those without 3D printing experience, this is annoying and discouraging.

### Prior art

CN214927116U and CN114683540A disclose solutions that use a single acceleration (gravity) sensor placed on a moving 3D printer table to level the 3D printer table. The control algorithm positions the table so that the acceleration sensor shows zero acceleration in the X and Y axes and maximum acceleration in the Z axis - that is, that the gravity vector is perpendicular to the table surface. Perpendicularity to the gravity vector means that the table is in a horizontal position. The self-levelling process is initiated by pressing a button.

The disadvantage of these solutions is the use of a single gravity sensor. If such a printer in placed on a surface that is not horizontal (it is, for example, inclined at an angle of 3°), the algorithm will result in the table being set horizontally, but the plane in which the head nozzle moves is parallel to the substrate, not to the table. As a result, the distance between the nozzle and the table is not constant and the print is not correct. Furthermore, the use of a gravity sensor prevents calibration in a weak gravitational field (e.g. in orbit).

CN214294497U discloses a similar solution.

CN205573046U describes a 3D printer with a Y-axis movable table. Here, a manual height adjustment of one of the heads has been introduced so that both heads are at the same distance from the table surface. This solves the problem that arises when one of the nozzles is replaced and is minimally longer than the nozzle that was removed. As a result, the new nozzle is lower than the other nozzle and 'draws' the print of this second head. This solution has the disadvantage that it is still a manual correction 'by eye'. One has to remember to make it. It is easy to change the position of the X-bar by pressing on the head on one side. It then moves downwards and the X-beam is no longer horizontally aligned. Both nozzles can be at the same height, but the print will not be correct.

PL224626B1 discloses a 3D printer print base preparation system and how to prepare the 3D printer print base. The document discloses a solution known from Zortrax printers. The printer table has three fields of isolated metal in the corners of the table. Levelling involves positioning the head over such a field and lowering the head until the nozzle touches the field. A current flow occurs, which is confirmation that the nozzle has touched the field. The height at which the head was when it touched the field is stored (along with the X and Y coordinates). This operation is repeated for the remaining fields. The result is 3 sets of numbers (X, Y, Z) indicating how the table is tilted from the horizontal. A 'print base', known as a raft, is then printed on the surface of the table. The surface of the print base is parallel to the plane of movement of the nozzle. This avoids mechanical changes in the position of the table. The downside of this solution is the poorer quality of the print base surface when the raft is detached from the print.

EP0901608A1 describes an optical sensor for delineating the angle of inclination. The document describes a device that measures the inclination of a surface to which the device is applied. It is based on mirrors and a laser beam that goes from the laser source to the detector after being reflected several times. It uses the reflection from a sheet of fluid (instead of a mirror) at one point to determine the angle. Due to the properties of the fluid in a strong gravitational field, applying the device to a surface other than perpendicular to the gravity vector causes the fluid sheet to form a different angle to the laser source-detector line and the reflection makes it possible for the detector to detect the beam deviated from the position that it points parallel to the ground surface. The deviation is deterministic and can be easily converted to a specific angle relative to the ground. Through the use of a fluid, the solution is gravity-dependent - which makes it impossible to calibrate the table under weak gravitational field conditions, and does not take into account the inclined surface on which the printer is positioned.

JPH10239051A describes a device that measures the angle of inclination. The device is similar to the description of EP0901608A1, but gives the ability to track deviation in two dimensions. It provides a more detailed description of tracking the spot of laser light on the detector and translating this information into tilt angles in the X and Y axes. Through the use of a fluid, the solution is gravity-dependent - making it impossible to calibrate the table in weak gravitational field conditions, and it does not take into account the tilted surface on which the printer is set up.

For printers with a Z-axis movable table, it is necessary to change the design and replace one Z-axis motor by three. At the same time, it is necessary to support the table on the drive screws in such a way that the table can change the angles at which it is relative to the base without bending the drive screws.

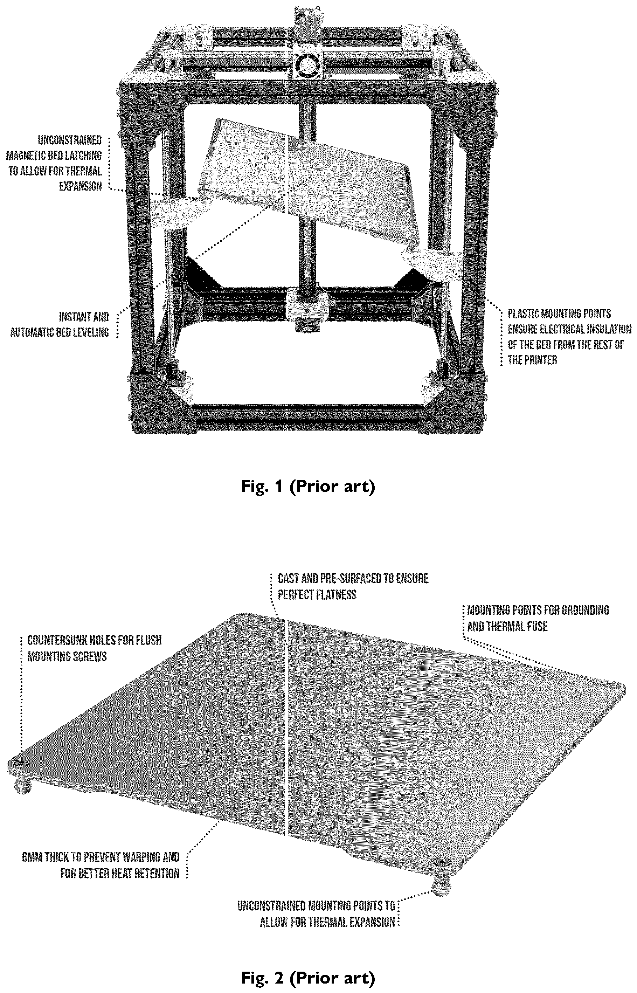

An example of this is the V-core 3 printer (https://v-core.ratrig.com/) (Fig. 1 - prior art).

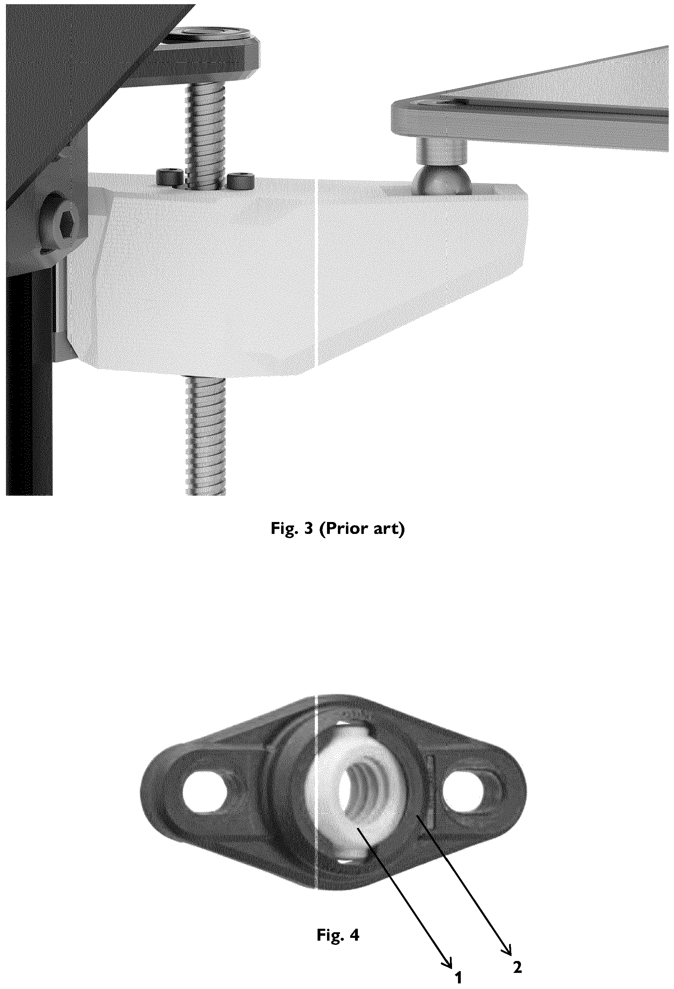

The table can angle itself to the printer base within certain limits. This effect is achieved by equipping the table from below with supports ending in balls that can move in the grooves of three supports that move independently in the Z axis (Fig. 2 - prior art, Fig. 3 - prior art).

The internet disclosure : Rat Rig: "Rat Rig V-Core 3 - 3 Point Kinematic Bed",, 23 December 2020 (2020-12-23), XP93081801,Retrieved from the Internet:URL:https://www.youtube.com/watch? v=bgkK7Fez8VU&t=3s [retrieved on 2023-09-13] discloses the preamble of the present claim 1.

The disadvantage of the solution shown in Fig. 3 of the present description is that the table lies on supports and can be raised. In the event of shocks or vibrations, it can move vertically. As a result, the quality of the print may deteriorate. This design also cannot be used in weightless conditions.

### Summary of the invention

The object of the present invention was to develop a system to enable self-levelling of the 3D printer table, which is resistant to shock and vibration and can even be used in a weightless state.

This object was achieved by a system for self-levelling the 3D printer table according to the present invention.

Thus, the subject matter of the present invention is a system for self-levelling the table in 3D printers, which comprises a system for moving the table in the Z-axis and a system for detecting the level of the table, characterised in that the system for moving the table in the Z-axis comprises three platforms (3) attached to the table and mounted on three drive screws (8), each of which is driven by an individual motor (9), each platform (3) comprising a first element (4) and a second element (5), on the first element (4) there is seated a nut (1) of the drive screw (8), which nut (1) is spherical in shape and is seated in a spherical pan (2), from the first element (4) of the platform (3) there is protruding a rod (6), moving in a linear bearing (7) embedded in the second element (5) of the platform (3), so that the second element (5) can rotate and move, said second element (5) of the platform (3) being attached to the 3D printer table, preferably from below; and the table level detection system comprises two mirrors, a left mirror (10) and a right mirror (11) embedded in two adjacent corners of the table from below, a laser (12) and a camera (13) for detecting the unevenness of the table with respect to the machine base.

The object of the present invention is illustrated for better understanding in the figures of the drawing, where:
Figs. 1-3 show a known prior art solutions,
Fig. 4 shows the construction of the nut used in the system according to the present invention,

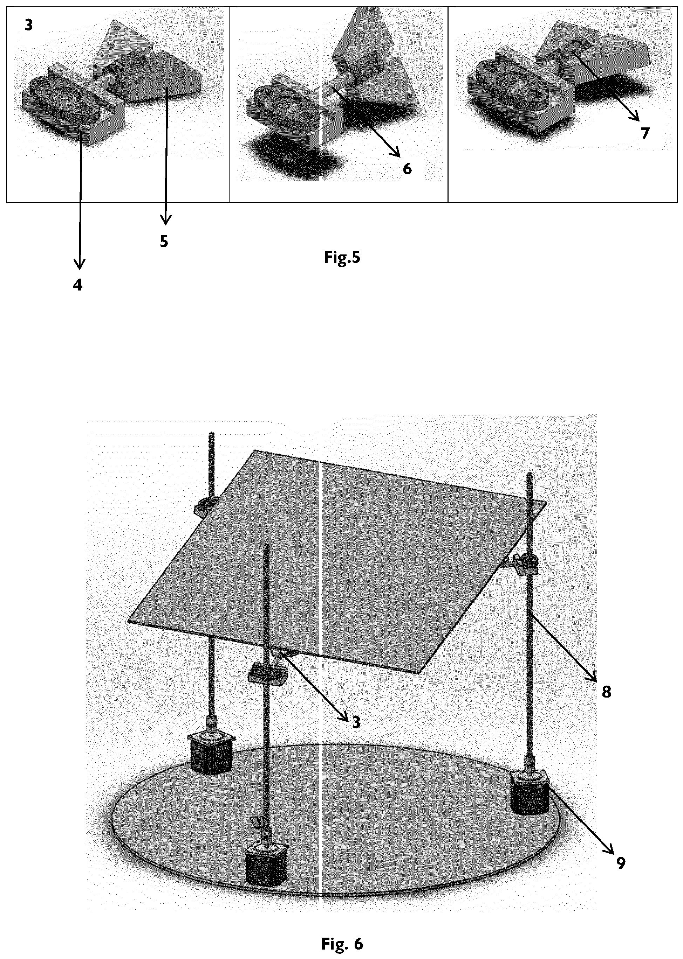

Fig. 5 illustrates the construction of the platform,
Fig. 6 illustrates the construction of the table, including the system for moving the table in the Z axis,

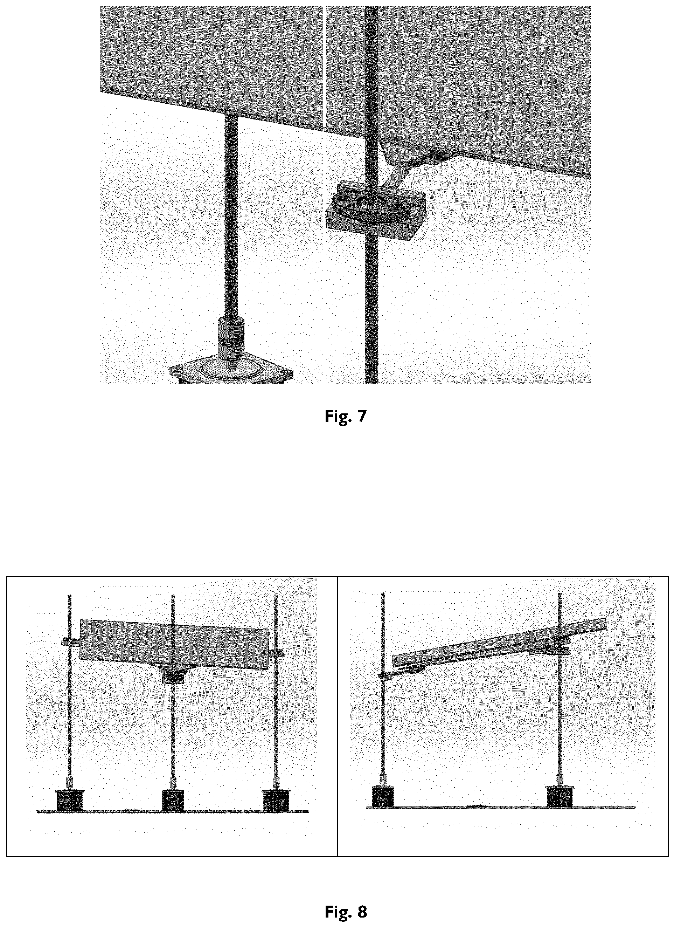

Fig. 7 shows a magnified view of the table design including the Z-axis table movement system,
Fig. 8 shows the possibility of manoeuvring the table using the Z-axis table movement system,

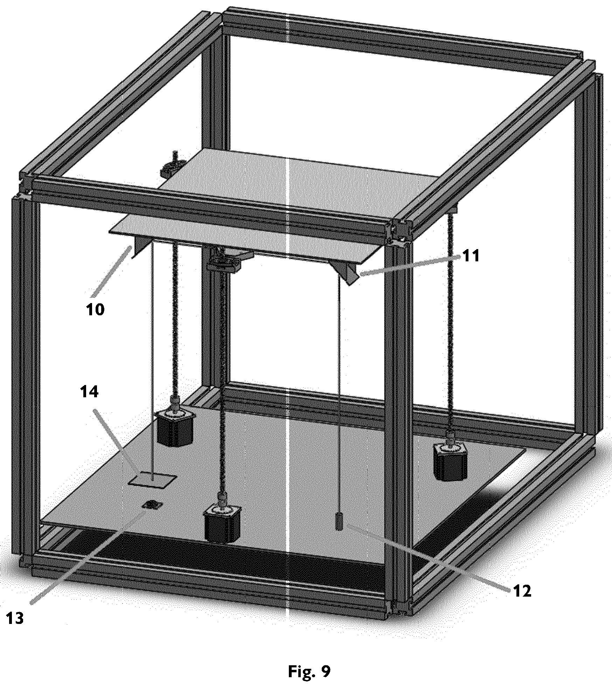

Fig. 9 shows a printer with a table equipped with a Z-axis table movement system and table level detection system,
Fig. 10 shows a view of the mirrors attached under the 3D printer's moving table,
Fig. 11 shows a view of the laser, matrix and camera under the matrix,
Fig. 12 shows the operation of the table detection system when the table is parallel to the printer base,
Fig. 13 shows the operation of the table detection system when the table is not parallel to the printer base.

The solution according to the present invention is similar to that used in the V-core 3 printer described above and in Figs. 1-3. However, instead of a groove-based ball, the present system includes a spherical nut and a linear bearing. Furthermore, unlike Ratrig's solution, the table is rigidly fixed and cannot be lifted. Thus, the present solution is resistant to shock and vibration.

The nut (1) of the drive screw (8) is spherical in shape, seated in a spherical pan (2), so that it has two degrees of freedom. The nut (1), in the pan (2), is seated on the platform (3), more precisely on the first element (4) of the platform (3), from which a rod (6) comes out, moving in a linear bearing (7) seated in the second element (5) of the platform (3). The second element (5) of the platform (3) can rotate and move, giving two further degrees of freedom. Thus, the nut (1) moves on the drive screw (8) and the second element (5) of the platform (3) is fixed to the 3D printer table, advantageously from below. In the system according to the present invention, the three platforms (3) attached to the table and positioned on three drive screws (8), each of which is driven by an individual stepper motor (9) allow the table to be moved in the Z-axis and to be tilted freely.

Alternatively, a Cardan joint can be used instead of a ball joint.

The auto-leveling system for the 3D printer table according to the present invention, in addition to a system for moving the table in the Z-axis, comprises a table level detection system.

The table level detection system includes two mirrors, a left mirror (10) and a right mirror (11) embedded in two adjacent corners of the table from below, a laser (12) and a camera (13) for detecting the unevenness of the table relative to the machine base.

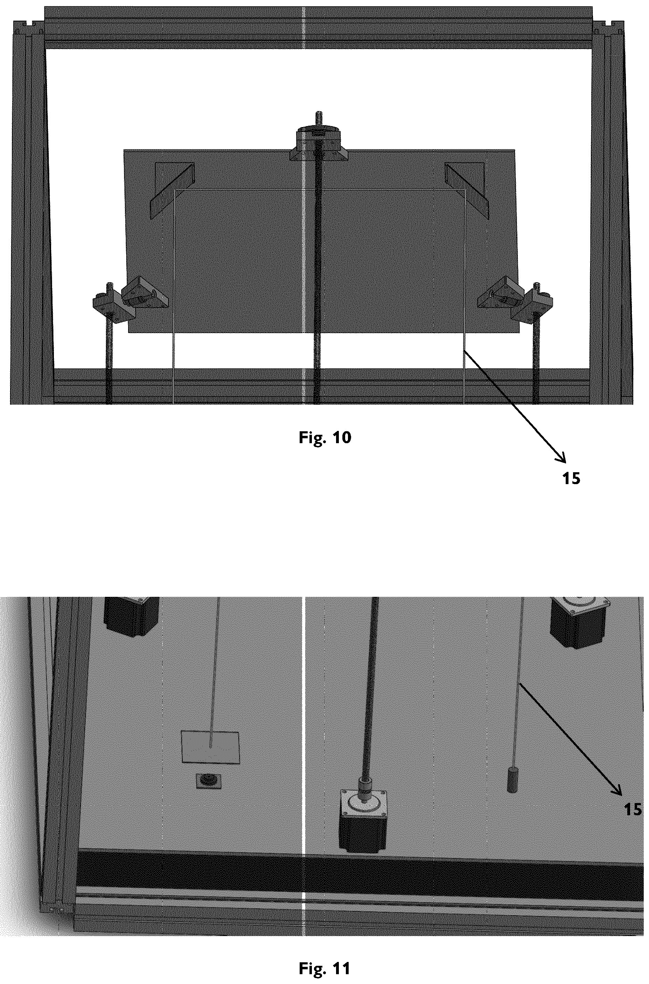

Fig. 10 shows a view of the mirrors (10) and (11) attached under the 3D printer's moving table. The red colour shows the path of the laser beam (15).

Fig. 11 shows a view of the laser (12), the matt plate (14) and the camera (13) under the matt plate (14).

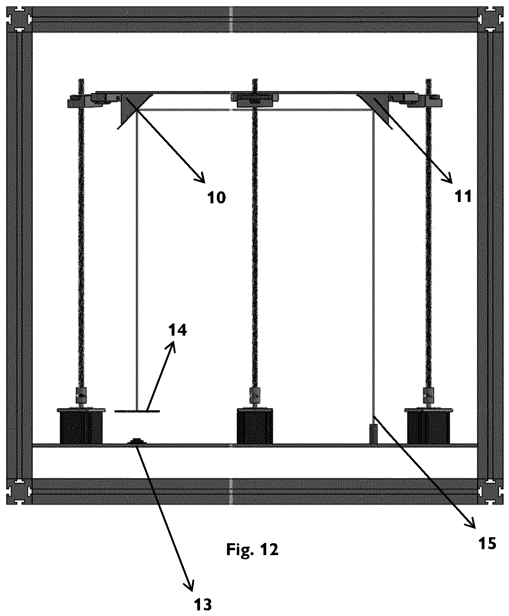

When the table is parallel (Fig. 12), the laser beam (15), after being reflected in two mirrors (10) and (11), hits the centre of the matt plate (14). The camera (13) sees a red spot in the centre of the matt plate (14).

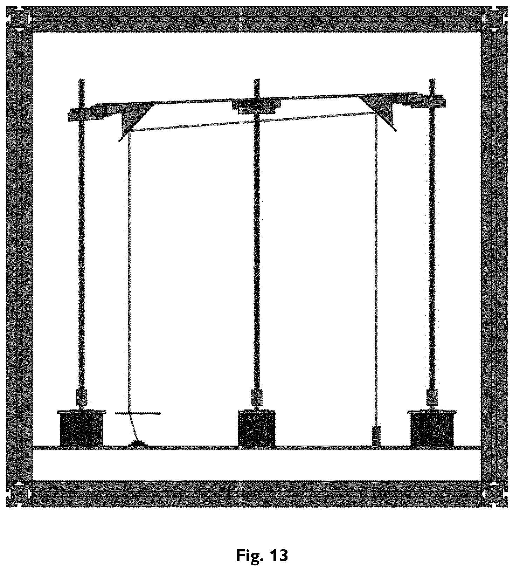

When the table is tilted to the left (Fig. 13) the mirrors (10) and (11) have a different position relative to the laser (12) and the path of the laser beam (15) is different. As a result, the laser beam (15) is displaced relative to the centre of the matt plate (14). The camera (13) therefore sees the laser spot (15) displaced with respect to the centre of the matte (14). The distance from the centre is proportional to the inclination of the table.

In this case, a system for moving the printer table in the Z axis is activated, which changes the setting of the stepper motors (9) so that there is no change in the height of the table, only in its inclination. The system corrects the setting of the motors (9) until the dot of the laser beam (15) is again in the centre of the matt plate (14).

The self-levelling mechanism ensures that the table is correctly positioned and tilted regardless of the printer's position. If the printer is placed on its side or upside down, it will still position the head correctly in relation to the table. This design feature allows it to be used in weightless conditions. Such a printer could end up on space stations to produce the parts needed.

In a situation where the table is supported on 3 drive screws and one of these screws is fitted with a limit switch used to set the printer in the home position (i.e. in a position where all 3 axes are zero) then the exact height of the table at the point of support on this screw on which the limit switch is fitted is known. Thus, if all 3 table drive screws are turned until a state of e.g. Z = 30 mm is reached, the certainty of table height applies only to that screw which is fitted with the limit switch. During self-levelling of the table, the position of only the other two screws can therefore be changed so that the laser spot (15) on the matt plate (14) is in the central position indicating the parallelism of the table with respect to the printer body. This means that by keeping the screw with the limit switch stationary while moving the other two screws, the height at which the table is positioned is known and the position of the laser spot (15) on the matt plate (14) ensures that the table is parallel to the body of the printer.

## Claims

1. A system for self-levelling a table for 3D printers which includes a Z-axis table movement system and a table level detection system, **characterised in that** the Z-axis table movement system includes:
- three platforms (3) fixed to the table and mounted on three drive screws (8), each of which is driven by an individual motor (9), each platform (3) comprising a first element (4) and a second element (5), on the first element (4) a nut (1) of the drive screw (8) is seated, which nut (1) is spherical in shape and is embedded in a spherical pan (2), from the first element (4) of the platform (3) sticks a rod (6) moving in a linear bearing (7) embedded in the second element (5) of the platform (3), so that the second element (5) can rotate and move, the said second element (5) of the platform (3) being fixed to the 3D printer table, preferably from below; and
the table level detection system includes:
- two mirrors, a left mirror (10) and a right mirror (11) embedded in two adjacent corners of the table from below, a laser (12) and a camera (13) for detecting the table's non-parallelism with respect to the machine base.

2. The system according to claim 1, **characterised in that** at least one motor (9) is a stepper motor.

3. The system according to claim 1 or 2, **characterised in that** at least one motor (9) is a DC motor equipped with an encoder or a linear motor equipped with an encoder.

4. The system according to claim 1 or 2 or 3, **characterised in that** the table level detection system includes a matt plate (14) onto which a laser beam (15) falls after being reflected in two mirrors (10) and (11).

## Patentansprüche

1. System zur Selbstnivellierung eines Tisches für 3D-Drucker, das ein Z-Achsen-Tischbewegungssystem und ein Tischniveau-Erkennungssystem umfasst, **dadurch gekennzeichnet, dass**
das Z-Achsen-Tischbewegungssystem umfasst:
- drei Plattformen (3), die am Tisch befestigt und auf drei Antriebsschrauben (8) montiert sind, von denen jede von einem jeweils eigenen Motor (9) angetrieben wird, wobei jede Plattform (3) ein erstes Element (4) und ein zweites Element (5) umfasst, auf dem ersten Element (4) eine Mutter (1) der Antriebsschraube (8) sitzt, die kugelförmig ist und in eine kugelförmige Schale (2) eingebettet ist, aus dem ersten Element (4) der Plattform (3) eine Stange (6) ragt, die sich in einem Linearlager (7) bewegt, das in das zweite Element (5) der Plattform (3) eingebettet ist, sodass sich das zweite Element (5) drehen und bewegen kann, wobei das zweite Element (5) der Plattform (3), vorzugsweise von unten, am Tisch des 3D-Druckers befestigt ist; und dass
das Tischniveau-Erkennungssystem umfasst:
- zwei Spiegel, einen linken Spiegel (10) und einen rechten Spiegel (11), die von unten in zwei benachbarte Ecken des Tisches eingebettet sind, einen Laser (12) und eine Kamera (13) zum Erfassen der Nichtparallelität des Tisches in Bezug auf die Maschinenbasis.

2. Das System gemäß Anspruch 1, **dadurch gekennzeichnet, dass** mindestens ein Motor (9) ein Schrittmotor ist.

3. System nach Anspruch 1 oder 2, **dadurch gekennzeichnet, dass** mindestens ein Motor (9) ein mit einem Encoder ausgestatteter Gleichstrommotor oder ein mit einem Encoder ausgestatteter Linearmotor ist.

4. System nach Anspruch 1 oder 2 oder 3, **dadurch gekennzeichnet, dass** das Tischniveau-Erkennungssystem eine matte Platte (14) umfasst, auf die ein Laserstrahl (15) fällt, nachdem er von zwei Spiegeln (10) und (11) reflektiert wurde.

## Revendications

1. Système de mise à niveau automatique d'une table pour imprimantes 3D qui comporte un système de déplacement de table d'axe Z et un système de détection de niveau de table, **caractérisé en ce que** le système de déplacement de table d'axe Z comporte :
- trois plateformes (3) fixées à la table et montées sur trois vis d'entraînement (8), chacune étant entraînée par un moteur individuel (9), chaque plateforme (3) comprenant un premier élément (4) et un deuxième élément (5), sur le premier élément (4) est logé un écrou (1) de la vis d'entraînement (8), lequel écrou (1) est de forme sphérique et est encastré dans une cuvette sphérique (2), à partir du premier élément (4) de la plateforme (3) se dresse une tige (6) mobile se déplaçant dans un palier linéaire (7) encastré dans le deuxième élément (5) de la plateforme (3), de sorte que le deuxième élément (5) puisse tourner et se déplacer, ledit deuxième élément (5) de la plateforme (3) étant fixé à la table d'imprimante 3D, de préférence par le dessous ; et
le système de détection de niveau de table comporte :
- deux miroirs, un miroir gauche (10) et un miroir droit (11) encastrés dans deux coins adjacents de la table par le dessous, un laser (12) et une caméra (13) pour détecter le non-parallélisme de la table par rapport à la base de machine.

2. Système selon la revendication 1, **caractérisé en ce qu'**au moins un moteur (9) est un moteur pas à pas.

3. Système selon la revendication 1 ou 2, **caractérisé en ce qu'**au moins un moteur (9) est un moteur à courant continu avec un codeur ou un moteur linéaire équipé d'un codeur.

4. Système selon la revendication 1 ou 2 ou 3, **caractérisé en ce que** le système de détection de niveau de table comporte une plaque mate (14) qui est frappée par un faisceau laser (15) après réflexion dans deux miroirs (10) et (11).
